# EUROPÄISCHE PATENTSCHRIFT

(11) **EP 1 732 197 B1**
(45) Veröffentlichungstag und Bekanntmachung des Hinweises auf die Patenterteilung: **10.06.2015**
(21) Anmeldenummer: 06405146.9
(22) Anmeldetag: 06.04.2006
(51) Int. Cl.: H02K 5/04, H02K 5/173, H02K 7/08, H02K 11/00, H02K 41/02

(54) **Linearmotor mit integrierter Führung**
Linear motor comprising an integrated guide
Moteur linéaire comportant un rail de guidage intégré

(30) Priorität: 09.06.2005 CH 9802005
(43) Veröffentlichungstag der Anmeldung: 13.12.2006
(73) Patentinhaber: Jenny, Alois, 6037 Root (CH)
(72) Erfinder: Jenny, Alois, 6037 Root (CH)
(74) Vertreter: Riebling, Peter

(56) Entgegenhaltungen:
- EP-A1- 1 615 322
- FR-A1- 2 820 070
- US-A- 3 342 534
- US-A- 3 790 233
- US-A- 4 923 311
- US-A- 5 357 158

## Beschreibung

Die vorliegende Erfindung betrifft einen Linearmotor mit integrierter Führung umfassend eine Grundplatte und einen linear beweglich über der Grundplatte geführter Schlitten, der auf Rollen gelagert ist, wobei die Rollen auf Schienen laufen und wobei im Bereich zwischen den Schienen der Linearantrieb und ein Positionsmesssystem angeordnet sind.

Linearmotoren sind Baueinheiten, die in der Automation vielfältige Anwendungen finden. Während konventionelle Linearmotoren in grösseren Einheiten vor allem im Maschinenbau und der Halbleitermontage schon häufig eingesetzt werden, waren diese bisher zu gross und zu teuer um sie in Anwendungen wie Laborautomation, Teilehandling, optische Prüftechnik usw. einzusetzen. In diesen Bereichen sind kompakte, hochintegrierte, direkt angetriebene, Linearachsen gefragt. Dabei soll die Befestigung möglichst frei wählbar sein.

Des weiteren ist man immer auch bestrebt direkt getriebene Linearachsen möglichst preiswert zu fertigen, da damit die Anwendungshäufigkeit steigt. Dabei soll dennoch eine hohe Maßgenauigkeit realisierbar sein. Während die Verfahrensgenauigkeit des Schlittens im wesentlichen durch das Positionsmesssystem und die Ansteuerung bedingt wird, ist die übrige Massengenauigkeit vor allem durch die Führung des Schlittens beeinflusst.

Der übliche Aufbau, sowohl von Linearachsen mit Linearmotoren als auch von Kreuztischen, besteht darin, dass diese eine Grundplatte aufweisen, die im wesentlichen plan ist, und eine darüber beweglich gehaltene Tischplatte. Zwischen den beiden Platten sind entsprechende Führungs- und Positionierungsmittel angeordnet.

Ein typisches Beispiel einer solchen Anordnung, im Konkreten ein Beispiel eines Kreuztisches, zeigt die US-2002/0140296 A. In völlig analoger Weise sind auch entsprechende Lineartische realisiert worden. Ein typisches Beispiel eines solchen Lineartisches zeigt die JP-2004-188566 A. Bei all diesen Systemen sind zwischen den beiden Platten Schienen- und Rollensysteme angeordnet, die üblicherweise als separate, vorgefertigte Einheiten ausgeführt sind und auch als Fertigelemente eingebaut werden. Diese Führungssysteme umfassen üblicherweise zwei stabile, präzise Schienen, wobei zwischen den beiden Schienen Rollenkäfige oder Kugelkäfige gehalten sind. Für die exakte Führung ist es selbstverständlich erforderlich, dass die Befestigung zwischen Grundplatte, Führungselement und Schlitten möglichst starr und absolut präzis ausgeführt ist. Damit die Schienen dieser Führungssysteme die geforderte Präzision erreichen und möglichst geringe Abnützung haben, bestehen diese aus entsprechenden Hartmetallen, üblicherweise aus Stahl.

Im Gegensatz dazu ist es jedoch wünschenswert, den Aufbau des beweglichen Schlittens möglichst so zu gestalten, dass dieser wenig Masse aufweist um hohe Dynamik zu erreichen. Dies wird meist dadurch realisiert, dass der Schlitten aus Leichtmetall gefertigt wird. Die Kombination von Führungsschienen aus Stahl und Schlitten aus Leichtmetall ist jedoch für präzise Linearachsen ausserordentlich problematisch, da die Wärmeausdehnungskoeffizienten beider Materialien sehr unterschiedlich sind. Speziell bei integrierten Direktantrieben wie Linearmotoren die sich im Dauerbetrieb erwärmen. Dies führt zu entsprechend unterschiedlichen Ausdehnungen, die je nachdem zur Vergrösserung des Spieles führen oder, im schlechtesten Fall, zu einem Verklemmen des Führungssystems.

Ein weiteres unerwünschtes Nebenproblem, welches bei Lineartischen auftritt, besteht darin, dass durch die konstruktive Anordnung der beiden Platten unter Zwischenlage der entsprechend erforderlichen Schienen, die Seitenflächen des Lineartisches für die Montage praktisch unbrauchbar sind. Dieses Problem wurde erkannt und entsprechend wurde gemäss der WO 02/060641 eine Lösung vorgeschlagen mit einem Lineartisch, bei dem die Grundplatte und die Seitenwände aus einem Monoblock gefertigt wurden. Hierbei handelt es sich jedoch um ein System, bei dem der Tisch selber mittels eines Schleppsystems bewegt wird. Der eigentliche Antrieb ist folglich nicht, wie bei Lineartischen mit möglichst geringem Volumen, zwischen den beiden Schienen und Grundplatte und Schlitten angeordnet.

Linearmotoren mit integrierter Führung der hier interessierenden Art werden beispielsweise von der Firma Parker-Hannifin unter der Bezeichnung MX80L in verschiedenen Ausführungen angeboten.

Aus der US 5 357 158 A ist ein Linearmotor mit integrierter Führung und einem linear beweglich über der Grundplatte geführten Schlitten zu entnehmen, der im Wesentlichen ein U-Profil aufweist.

An der Unterseite des U-förmig profilierten Schlittens ist eine Permanentmagnetanordnung angeordnet, die einen möglichst geringen Abstand - wegen zu vermeidender Wirbelstromverluste - zu der Magnetspulenanordnung im Grundkörper haben soll.

Nachteil bei dem Linearmotor ist jedoch, dass er keine kompakte Bauweise aufweist. Der U-förmig profilierte Schlitten ist auf der U-förmig profilierten Grundplatte aufgesetzt und ragt in wesentlichem Maß über den Monoblock (Stator) hinaus.

Weiterer Nachteil ist, dass zur Führung des Schlittens eine außen liegende, an den Seitenwänden des Monoblocks nach außen gerichtete Kugelumlaufführung vorgesehen ist, die zu einer unerwünschten Verbreiterung der Baubreite eines solchen Linearmotors führt, denn die Kugelumlaufführung mit den Kugeln ist einerseits an der Außenseite der Seitenwände des Monoblocks und andererseits an der Außenseite des U-förmig profilierten Schlittens angeordnet.

Damit bekommt der Linearmotor eine unerwünscht große Baubreite und eine unerwünscht hohe Bauhöhe, weil der U-förmig profilierte Schlitten auf dem U-förmig profilierten Monoblock aufgesetzt ist und nicht in diesem integriert ist.

Ein weiterer Nachteil ist, dass eine Kugelumlaufführung ungenau arbeitet, denn zur Erzielung einer hohen Präzision müssen hochgenau bearbeitete Kugeln in hochgenau gearbeiteten Umlaufbahnen geführt sein. Der maschinelle Aufwand für die hochgenaue Anfertigung der Umlaufbahnen ist jedoch hoch, und solche Umlaufbahnen können nicht mit der erforderlichen Präzision hergestellt werden.

Aus dem genannten Grund hat der Linearmotor nach der US 5 357 158 A eine unerwünscht hohe Bauhöhe, eine unerwünscht hohe Baubreite und eine unpräzise Führung des Schlittens auf dem Monoblock, wobei diese Schlittenführung auch noch zur weiteren Vergrößerung der Bauhöhe und der Baubreite führt.

Aus den US-A 3 342 534 und US-A 4 923 311 sind Laufrollenanordnungen zu entnehmen, die außenseitig des Grundkörpers und innenseitig des U-förmig profilierten Schlittens angeordnet sind, was zu einer unerwünscht hohen Baubreite des Schlittens führt, weil dessen U-Profil den Grundkörper von außen her übergreift.

Der gleiche Nachteil eines ein hohes Bauvolumen aufweisenden Linearmotors ist auch aus der Druckschrift EP 1 615 322 A1 ableitbar.

Im Schlitten sind Magnetspulen angeordnet, während die Permanentmagneten im Grundkörper angeordnet sind. Dies führt zu einem unerwünscht hohen Bauvolumen, und darüber hinaus besteht der weitere Nachteil, dass mit den Kugelumlaufführungen ein hoher Fertigungsaufwand besteht und eine präzise Längsführung des Schlittens im U-förmig profilierten Grundkörper nicht möglich ist.

Aufgrund der Tatsache, dass die Magnetspulen im verschiebbaren Schlitten angeordnet sind, ergibt sich eine hohe Massenträgheit des verschiebbar angetriebenen Schlittens und die Notwendigkeit, die gegen Knickung und Beschädigung empfindlichen, flexiblen Stromzuführungskabel dem bewegbaren Schlitten zuzuführen. Die dort dargestellte Kugelumlaufführung macht den gesamten Linearmotor kostenaufwendig und schwierig in der Herstellung.

Dies gilt auch für die US 3 790 233 A, weil lediglich eine Kreuzrollenkäfigführung dargestellt ist, die aber außenseitig an einem Grundkörper angeordnet ist und zu einer unerwünscht großen Baubreite führt.

Diesen Nachteil zeigt im Übrigen auch die FR 2 820 070 A, weil dort ein plattenförmiger Schlitten auf zwei zueinander parallelen umlaufenden Bändern befestigt ist, sodass mit dem Antrieb der Bänder der Schlitten angetrieben wird. Es handelt sich demnach nicht um einen Linearmotor mit Permanentmagneten und gegenüberliegenden Spulenpaketen.

Demnach liegt der Erfindung die objektive Aufgabe zugrunde, einen Linearmotor mit integrierter Führung nach der US 5 357 158 A so weiterzubilden, dass ein kompakter Aufbau bei verminderter Baubreite, verminderter Bauhöhe und präziserer Führung des Schlittens gewährleistet ist, mit dem Ziel, mehrere Linearmotoren direkt aneinander oder übereinander anreihen zu können, ohne dass eine gegenseitige Störung durch die bewegbar angetriebenen Schlitten erfolgt.

Zur Lösung der gestellten Aufgabe ist die Erfindung durch die technische Lehre des Anspruches 1 gekennzeichnet.

Die Merkmale a bis d dienen der präziseren Führung des Schlittens auf der Grundplatte, weil nun erstmals bei einem Linearmotor in den Seitenwänden im Querschnitt rechteckige Längsnuten eingefräst sind, die zur Aufnahme von eingelegten, hierfür im Querschnitt gerundeten Laufstäben dienen (Merkmal b), und nach dem Merkmal e ist vorgesehen, dass der Schlitten etwa U-förmig profiliert ist und mit seinem U-Profil etwa bündig im Profil des aus Grundplatte und daran angeformten Seitenwänden bestehenden Monoblocks aufgenommen ist.

Aus dem Merkmal e ergeben sich in Verbindung mit den Merkmalen a bis d folgende Vorteile:
Dadurch, dass der Schlitten im Wesentlichen vollständig im U-Profil des Monoblocks aufgenommen ist, ragt er demnach nicht über die Oberfläche des Monoblocks hinaus, und damit ergibt sich ein besonders raumsparender Aufbau.

Bedingt durch die Tatsache, dass der Schlitten nicht über die Oberfläche des Monoblocks hinausragt, gibt es auch keine über den Monoblock hinausragenden Teile eines Schlittens, die beim Betrieb des Linearmotors an irgendwelchen außen liegenden Montageteilen einer umgebenden Peripherie anstoßen könnten.

Die Erfindung bietet nun mit der technischen Lehre des Anspruches 1 mit Kombination der Merkmale a bis e erstmals den Vorteil, dass ein Linearmotor mit integrierter Führung nunmehr mit einem weiteren Linearmotor unmittelbar Seite an Seite aneinander angereiht werden kann, ohne dass die Gefahr der Kollision besteht. Dadurch ergibt sich ein besonders raumsparender Aufbau und erstmals die Möglichkeit, dass mehrere Linearmotoren - nicht nur nebeneinander, sondern auch übereinander - angeordnet werden können, ohne dass die Gefahr der Kollision von Bauteilen des Schlittens mit der umgebenden Peripherie besteht.

Ein weiterer Vorteil der Erfindung liegt darin, dass die kompakte Bauweise bedingt durch die vollständigen Aufnahme eines U-förmig profilierten Schlittens in einem gleichfalls U-förmig profilierten Rundkörpers erstmals die Möglichkeit bietet, dass man direkt an der Unterseite des Schlittens die Magneteinheit anordnet - was zwar aus der US 5 357 158 A bekannt ist, was aber dort mit dem Nachteil verbunden ist, dass die Magnetspulenanordnung erhöht und unnötigerweise mit erhöhtem Einbauvolumen im Innenraum des U-förmig profilierten Monoblocks eingebaut ist.

Bei der Erfindung hingegen kann die Magnetspulenanordnung unmittelbar in der Grundplatte integriert werden, was mit dem Vorteil verbunden ist, dass das auch in dieses U-Profil eingreifende Schlittenprofil in besonders dichtem Abstand zu der Magnetspulenanordnung angeordnet werden kann. Unerwünschte Wirbelstromverluste werden damit vermieden.

Nunmehr ergibt sich mit der Erfindung (der Kombination der Merkmale a bis e) auch der weitere Vorteil, dass nun eine besonders präzise Schlittenführung dadurch gegeben ist, dass der Schlitten mithilfe von im Querschnitt rechteckigen Nuten und dort in den Nuten eingelegten Laufstäben und auf den Laufstäben verschiebbar gelagerten Kreuzrollenkäfigen nun besonders präzise verschiebbar gelagert werden kann, weil aufgrund des U-förmigen Eingriffs des Schlittens in den Innenraum des Monoblocks nun erstmals der Vorteil besteht, dass die gesamte Laufrollenanordnung innenseitig im Monoblock angeordnet ist und nicht außenseitig, wie es die US 5 357 158 A lehrt.

Mit der gegebenen, nunmehr präzisierten technischen Lehre ergibt sich neben einem kompakten Aufbau auch eine besonders präzise Führung eines Schlittens in einem Linearmotor, was bisher nicht bekannt war.

Diese Aufgabe löst ein Linearmotor mit integrierter Führung der eingangs genannten Art mit den kennzeichnenden Merkmalen des Patentanspruches 1.

Weitere vorteilhafte Ausgestaltungsformen des Erfindungs-gegenstandes gehen aus den abhängigen Ansprüchen hervor und deren Bedeutung sowie die Wirkungsweise wird in der nachfolgenden Beschreibung mit Bezug auf die anliegenden Zeichnungen erläutert.

In der Zeichnung ist ein Ausführungsbeispiel des Erfindungsgegenstandes dargestellt und nachfolgend beschrieben. Es zeigt:
Figur 1 einen erfindungsgemässen Linearmotor mit integrierter Führung im fertig montierten Zustand in perspektivischer Darstellung und
Figur 2 einen ebensolchen Linearmotor in der Seitenansicht, während
Figur 3 eine schematische Darstellung der erfindungs-gemässen Lagerung des Schlittens in dem als Monoblock gestalteten Gehäuseteil zeigt.
Figur 4 zeigt den Monoblock und den Schlitten, beide in perspektivischer Darstellung als Bauteile des erfindungsgemässen Linearmotors mit integrierter Führung und
Figur 5 einen Vertikalschnitt durch den Linearmotor senkrecht zur Verschiebungsrichtung des Schlittens.

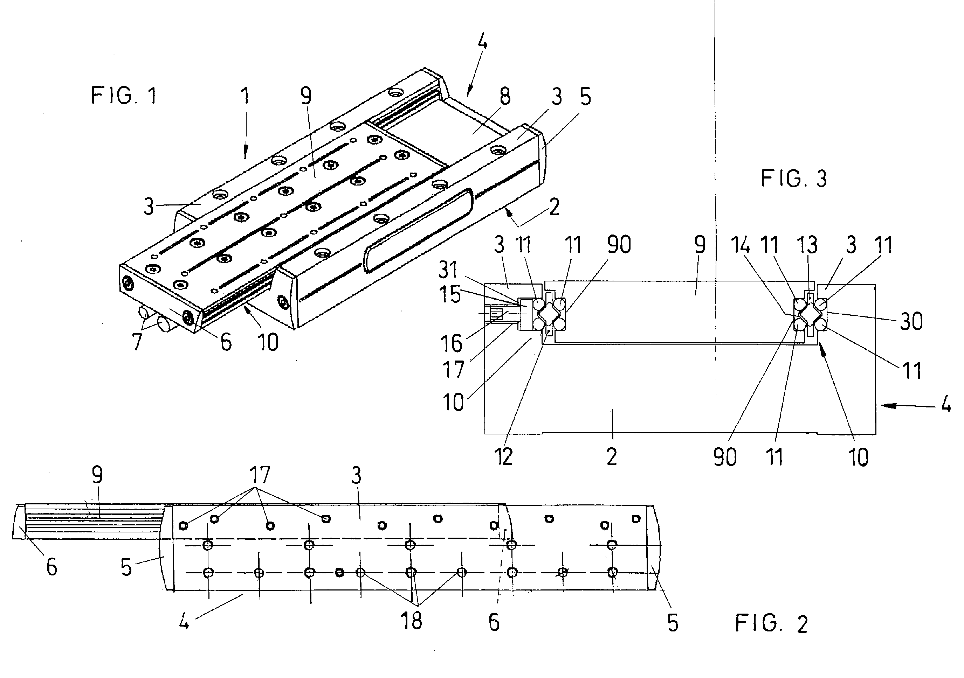

Figur 1 zeigt den erfindungsgemässen Linearmotor mit integrierter Führung im zusammengebauten Zustand in perspektivischer Darstellung. Der Linearmotor mit integrierter Führung ist insgesamt mit 1 bezeichnet. Eine Grundplatte 2 ist zusammen mit zwei Seitenwänden 3 als Monoblock 4 gestaltet. Zwischen den beiden Seitenwänden 3 läuft ein Schlitten 9, der mit dem Monoblock 4 den Linearmotor 1 bildet. Sowohl im Monoblock 4 als auch im Schlitten 9 sind Teile des Linearantriebes untergebracht. Dieser Linearantrieb wird über Speisekabel und Steuerleitungskabel 7 gespiesen und angesteuert. Die im Monoblock 4 untergebrachten Antriebsteile sind durch eine Abdeckung 8 geschützt und folglich nicht einsehbar. Sowohl der Monoblock 4 als auch der Schlitten 9 weisen eine stirnseitige Abdeckung auf. Die stirnseitige Abdeckung des Monoblocks 4 ist mit 5 und die stirnseitige Abdeckung des Schlittens mit 6 bezeichnet. In der Figur 1 ist die sichtbare Seitenwand 3 ohne seitlich angeordnete Bohrungen dargestellt und zeigt lediglich ein Feld, welches beispielsweise zur Anbringung einer Beschriftung oder einer Typenbezeichnung geeignet ist. Demgegenüber zeigt die Seitenwand 3 in der Figur 2 eine Vielzahl von Gewindebohrungen 18 sowie eine Reihe von in der Höhe abwechslungsweise etwas versetzten Gewindelöchern 17, deren Bedeutung nachfolgend mit Bezug auf die Figur 3 erläutert wird.

In der Figur 3 ist der Linearmotor mit integrierter Führung rein schematisch dargestellt. Die Darstellung dient lediglich der Erläuterung der konstruktiven Ausgestaltung der Längsführung des Schlittens 9 im Monoblock 4. In dieser schematischen Zeichnung erkennt man deutlich, dass der Monoblock 4 aus einer Grundplatte 2 und zwei einstückig damit verbundenen Seitenwänden 3 besteht. Prinzipiell könnten auch stirnseitige Wände vorhanden sein, welche die stirnseitige Abdeckung 5 erübrigen würden. Die Schlittenführung ist insgesamt mit 10 bezeichnet. Auf der Innenseite jeder Seitenwand 3 ist eine Längsnut 30 exakt eingefräst. Die Längsnut 30 erstreckt sich über die gesamte Länge der Seitenwände 3. Gegengleich ist eine ebensolche Längsnut 90 in den Schlitten 9 eingefräst und auch diese Längsnut 90 erstreckt sich über die gesamte Länge des Schlittens 9. Als Besonderheit ist die Längsnut 30 auf einer Seite tiefer gestaltet als in der gegenüber liegenden Längsnut. Diese vertiefte Längsnut ist mit 31 bezeichnet. In den Längsnuten 30 und 90 sind Laufstäbe 11 in den Ecken eingelegt. Diese Laufstäbe 11 haben zumindest einen gerundeten oder kreisrunden Querschnitt oder sind, wie hier dargestellt, als Stäbe mit einem im wesentlichen kreisrunden Querschnitt und einer ebenen Lauffläche realisiert. Diese Laufstäbe 11 sind in den Längsnuten 30, 31, 90 nur eingelegt und nicht mit zusätzlichen Mitteln gesichert. Zwischen den Laufstäben 11 ist ein Kreuzrollenkäfig 12 fliegend gelagert. Solche Kreuzrollenkäfige sind in vielen Dimensionen auf dem Markt frei erhältlich. Die Kreuzrollenkäfige umfassen einen Käfig 13, in dem eine Vielzahl von Rollen 14 in gleichmässigem Abstand drehbar gelagert sind. Die Rollen 14 sind jeweils abwechslungsweise um 90° versetzt angeordnet. Jede Rolle liegt jeweils nur auf einem Laufstab 11 auf. In der gezeigten Ausführungsform liegen die Rollen auf der ebenen Lauffläche des Laufstabes 11 auf. Abwechslungsweise liegt somit jeweils eine Rolle 14 beispielsweise auf einem unteren Laufstab, welcher in der Nut 90 im Schlitten 9 angeordnet ist, auf, worauf die nächste Rolle auf dem unteren Laufstab in der Nut 30 der Seitenwand 3 läuft, während die wiederum nächste Rolle auf dem oberen Laufstab in der Nut 90 läuft und schliesslich die in Längsrichtung darauf folgende Rolle auf dem oberen Laufstab in der Längsnut 30 läuft. Die Reihenfolge der Rollen und ihre entsprechenden Laufflächen wiederholen sich dann ständig. Die angegebene Folge der Rollenanordnung ist lediglich eine mögliche Version, genau so ist es möglich, dass zwei benachbarte Rollen auf Laufstäben 11 laufen, die einander diagonal gegenüber liegen.

Ist nur mit geringer mechanischer Belastung zu rechnen, so können anstelle der Kreuzrollenkäfige auch preiswertere Kugelkäfige eingesetzt werden, wobei in analoger Weise wie nachfolgend beschrieben eine Spieleinstellung realisiert werden kann und muss.

Wie bereits erwähnt, sind die Laufstäbe 11 ebenso wie die Kreuzrollenkäfige 12 lediglich fliegend gelagert. Um eine solche Konstruktion mit genügender Präzision überhaupt realisieren zu können, muss entweder extrem genau gearbeitet werden oder, wie hier in bevorzugter Ausführung, eine vertiefte Längsnut 31 in einer der beiden Seitenwände 3 eingeformt sein und in dieser vertieften Nut 31 ist ein Spannstab 15 frei beweglich eingelegt. Der Spannstab 15 liegt mit einem gewissen Spiel in der vertieften Nut 31 und die dort liegenden Laufstäbe 11 ruhen auf diesem Spannstab 15. In der entsprechenden Seitenwand 3 sind Gewindelöcher 17 angebracht. In diesen Gewindelöchern 17 lagern Einstellschrauben 16, die auf den Spannstab 15 drücken. Hierdurch werden quer zum Schlitten 9 und über diese hinweg sämtliche Rollen beziehungsweise Kreuzrollenkäfige 12 sowie sämtliche Laufstäbe 11 so verschoben, dass praktisch jegliches Spiel aufgehoben wird. Bei Lineartischen kleineren Formats genügt es, eine Reihe von Einstellschrauben 16 vorzusehen, die zentrisch bezüglich der Höhe des Spannstabes 15 auf denselben aufdrücken. Bei grösseren Lineartischen wird entsprechend auch die Höhe des Spannstabes 15 grösser und in diesem Falle ist es sinnvoll die Einstellschrauben 16 abwechslungsweise in der oberen Hälfte und in der unteren Hälfte des Spannstabes zur Auflage zu bringen. Entsprechend müssen dann die Gewindelöcher 17 auch so angeordnet sein. Eine solche Anordnung der Gewindelöcher 17 zeigt die Figur 2.

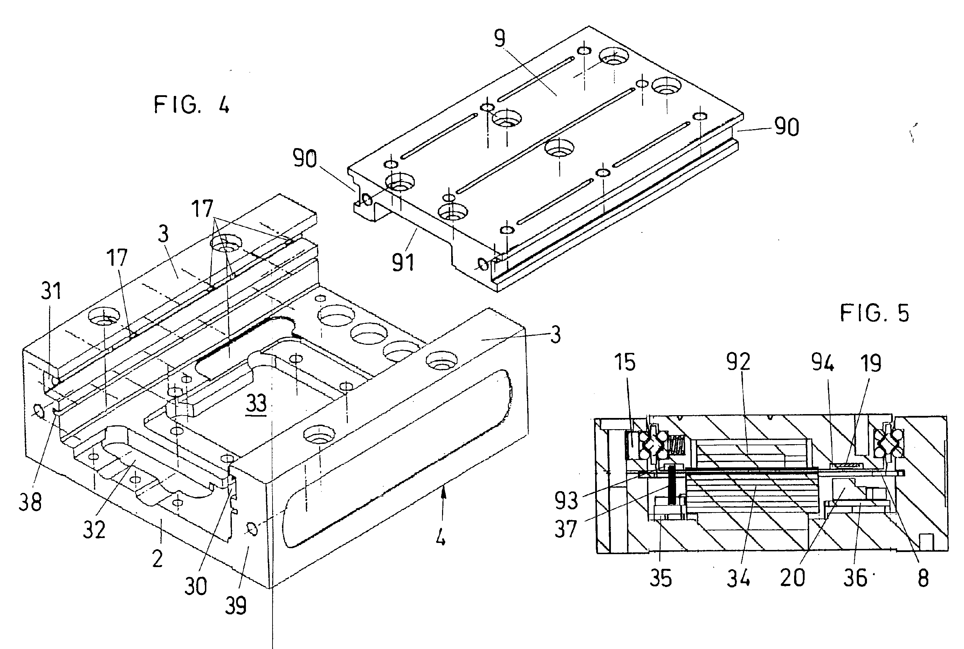

In der Figur 4 sind der Monoblock 4 sowie der Schlitten 9 je für sich perspektivisch dargestellt gezeichnet. Der Monoblock 4 besteht aus der Grundplatte 2 und den beiden Seitenwänden 3 . Die in den Seitenwänden 3 an deren Innenseite eingefrästen Längsnuten 30 beziehungsweise 31 sind hier deutlich erkennbar. Auch ersichtlich ist, dass die in der Zeichnung links verlaufende Längsnut 30 eine vertiefte Längsnut 31 ist. Die mit der vertieften Längsnut 31 kommunizierenden Gewindelöcher 17 sind ebenfalls noch erkennbar. Es handelt sich hierbei um die unteren Gewindelöcher, während die oberen Gewindelöcher hier nicht sichtbar sind. Zwischen den beiden Seitenwänden 3 sind in der Grundplatte 2 verschiedene Ausnehmungen beziehungsweise Vertiefungen erkennbar. So besteht eine längliche Ausnehmung 32, welche parallel zur Stirnseite 39 des Monoblocks verläuft. Zwischen dieser Ausnehmung 32 und der Stirnseite 39 sind zwei Auswölbungen angeordnet, in welche zwei Kabel 7 zu zumindest teilweise liegen kommen. Die Kabel werden mit einer Kabelklemme (nicht gezeigt) am Monoblock 4 form- und/oder kraftschlüssig befestigt. Die Kabelklemme dient der Kabelzugentlastung und kann auch zur Verbindung eines metallischen Schirms eines Kabels mit der Masse des Linearmotors dienen.

Die Stirnseite beziehungsweise Stirnfläche ist mit 39 bezeichnet. Auf ihr lässt sich die hier nicht dargestellte stirnseitige Abdeckung 5 auf den Monoblock 4 aufschrauben. Die stirnseitige Abdeckung 5 dient dabei nicht nur der Ästhetik, sondern dient gleichzeitig als Anschlag für die Laufstäbe 11, die folglich in der Längsrichtung unverschieblich gehalten sind.

Ferner ist in der Grundplatte 2 des Monoblocks 4 eine zentrische Vertiefung 33 eingeformt, die zur Aufnahme einer Erregerspuleneinheit 34 dient. In der Längsrichtung des Monoblocks vor und hinter der zentrischen Vertiefung 33 sind zudem Löcher oder Gewindelöcher vorhanden, die dazu dienen, mittels entsprechender Halteplatten die Erregerspuleneinheit zu fixieren. Seitlich der zentrischen Vertiefung 33 sind, wie in der Querschnittszeichnung der Figur 5 erkennbar, Leiterplatten 35 und 36 angebracht. Die Leiterplatte 35 ist mit entsprechenden Leiterbahnen versehen, die der Speisung der Erregerspulen dienen. Entsprechend wird diese Leiterplatte 35 als Speisungsleiterplatte bezeichnet. Auf der gegenüber liegenden Seite ist wiederum eine Leiterplatte 36 angebracht, die die elektronische Schaltung mit allen erforderlichen Elementen umfasst, die zur Positionserfassung des Schlittens 9 relativ zum Monoblock 4 dienen. Hierzu ist auf der Unterseite des Schlittens 9 und damit in der Figur 4 nicht erkennbar, eine in der Länge begrenzte Aufnahmenut 94 eingefräst. In dieser Aufnahmenut 94 ist ein Glasmassstab 19 fixiert, beispielsweise durch Verklebung. Solche Glasmassstäbe 19' die mit entsprechenden hochpräzisen Markierungen versehen sind, sind handelsüblich erhältlich. Mit dem Glasmassstab kommuniziert der darunter liegende optische Messkopf 20. Der optische Messkopf 20 auf der Leiterplatte 36 erfasst beim Verfahren des Schlittens 9 die Markierungen des Glasmassstabes.

Zur mechanischen Sicherung des Schlittens 9 relativ zur Grundplatte 2 beziehungsweise zum Monoblock 4 ist ein Anschlagbolzen 37 seitlich der zentrischen Vertiefung 33 angebracht. Dieser Bolzen 37 erstreckt sich senkrecht von der Grundplatte 2 nach oben und greift mit seinem oberen Ende in eine in Längsrichtung begrenzte Längsausfräsung 93 des Schlittens 9 ein.

Die gesamte Führungskonstruktion des erfindungsgemässen Monoblock-Linearmotors ist trotz extrem hoher Laufgenauigkeit preiswert herstellbar. Dank dem Konzept der fliegenden Anordnung sowohl der Laufstäbe 11 als auch der Kreuzrollenkäfige 12, kann ein ausserordentlich preiswertes Führungssystem realisiert werden. Gesonderte, massive Schienen aus Stahl, mit entsprechendem Volumen, sind hierzu nicht erforderlich. Dank des quer zur Laufrichtung des Schlittens verschiebbaren Spannstabes 15 kann eine spielfreie, präzise Führung realisiert werden, ohne dass hierzu eine hoch präzise Fertigung mit entsprechenden Kosten erforderlich ist.

Der erfindungsgemässe Monoblock-Linearmotor ist dank seiner Konstruktion auch ausgezeichnet in Kreuztisch Anordnungen zu verwenden. Hierbei kann der Monoblock der oberen Linearachse direkt, in 90° Ausrichtung, auf den Schlitten der unteren Linearachse geschraubt werden. Es ist keine Zwischenplatte erforderlich.

Die Kombination von Linearachsen zu einem Kreuztisch ist bekannt und wird nicht gesondert beansprucht. Trotzdem wird hier besonders darauf hingewiesen, da durch die beiden Monoblockaufbauten eine ausgesprochen stabile Lösung ohne Zwischenplatte möglich ist.

### Bezugszeichenliste:

- 1: Linearmotor
- 2: Grundplatte
- 3: Seitenwände
- 4: Monoblock
- 5: stirnseitige Abdeckung des Monoblocks
- 6: stirnseitige Abdeckung des Schlittens
- 7: Speise- und Steuerleitungskabel
- 8: Abdeckung
- 9: Schlitten
- 10: Schlittenführung
- 11: Laufstäbe
- 12: Kreuzrollenkäfig
- 13: Käfig
- 14: Rollen
- 15: Spannstab
- 16: Einstellschraube
- 17: Gewindeloch
- 18: Gewindebohrungen
- 19: Glasmassstab
- 20: Optischer Messkopf
- 30: Längsnut in Seitenwändeninnenseiten
- 31: vertiefte Längsnut
- 32: längliche Ausnehmung parallel zur Stirnseite
- 33: zentrische Vertiefung
- 34: Erregerspuleneinheit
- 35: Speisungsleiterplatte
- 36: Positionierungsleiterplatte
- 37: Anschlagbolzen
- 38: Einlegenut
- 39: Stirnfläche
- 90: Längsnut in den Längskanten
- 91: Längsausnehmung
- 92: Magneteinheit
- 93: Längsausfräsung im Schlitten
- 94: Aufnahmenut

## Patentansprüche

1. Linearmotor mit integrierter Führung (1) umfassend eine Grundplatte (2) und einen linear beweglich über der Grundplatte geführten Schlitten (9), der auf Rollen gelagert ist wobei im Bereich zwischen den Schienen der Linearantrieb und ein Positionsmesssystem angeordnet sind, und wobei die Grundplatte (2) mit den Seitenwänden (3) als ein Monoblock (4) ausgeführt ist, in dem Ausnehmungen für die Aufnahme von antriebserforderlichen Einheiten geformt sind, **dadurch gekennzeichnet, dass**
a. die Rollen auf Schienen laufen und
b. in den Seitenwänden (3) je eine im Querschnitt rechteckige Längsnut (30,31) eingefräst ist, die zur Aufnahme von eingelegten je zwei im Querschnitt gerundeten Laufstäben (11) dient
c. dass der Schlitten (9) an den Längsstirnflächen gegengleiche im Querschnitt rechteckige Nuten (90) aufweisen, in denen ebensolche im Querschnitt gerundete Laufstäbe (11) eingelegt sind,
d. wobei der Schlitten (9) beidseitig auf fliegend gelagerten Kreuzrollenkäfigen (12) rollend gelagert ist, die auf den Laufstäben (11) laufen
e. und dass der Schlitten (9) etwa U-förmig profiliert ist und mit seinem U-Profil etwa bündig im Profil des aus Grundplatte (2) und daran angeformten Seitenwänden (3) bestehenden Monoblocks aufgenommen ist.

2. Linearmotor (1) nach Anspruch 1, **dadurch gekennzeichnet, dass** einseitig in einer der beiden Längsnuten (30,31) ein Spannstab (15) eingelegt ist, welcher über in der entsprechenden Seitenwand angebrachte Gewindebohrungen (18) mittels Andruckschrauben (16) quer zur Laufrichtung des Schlittens (9) einstellbar verschiebbar ist, um eine spielfreie Lagerung zu ermöglichen.

3. Linearmotor (1) nach Anspruch 1, **dadurch gekennzeichnet, dass** in der Grundplatte (2) parallel zur Stirnfläche (39) des Monoblocks (4) eine längliche Ausnehmung (3 2) eingeformt ist, und dass zwischen der Ausnehmung (32) und der Stirnfläche (39) mindestens eine Kabelklemme angeordnet ist, mit welcher mindestens ein Kabel (7) form-und/oder kraftschlüssig an der Grundplatte (2) befestigbar und in die Ausnehmung (32) mündend anordbar ist.

4. Linearmotor (1) nach Anspruch 1, **dadurch gekennzeichnet, dass** in den Seitenwänden zusätzliche Gewindebohrungen (18) geformt sind, die zur Montage des Linearmotors an eine Fixierfläche dienen.

5. Linearmotor (1) nach Anspruch 1, **dadurch gekennzeichnet, dass** der Monoblock (4) und der Schlitten (9) aus demselben Material gefertigt sind.

6. Linearmotor (1) nach Anspruch 5, **dadurch gekennzeichnet, dass** der Monoblock (4) und der Schlitten (9) aus Aluminium gefertigt sind.

7. Linearmotor (1) nach Anspruch 1, **dadurch gekennzeichnet, dass** im Monoblock eine zentrische Vertiefung (33) eingeformt ist, in der eine mit Erregerspulen (34) versehene Einheit einlegbar ist, während im Schlitten (9), in der im eingebauten Zustand zur Grundplatte gerichteten Fläche, eine Längsausnehmung (91) eingeformt ist, welche zur Aufnahme einer Magneteinheit (92) dient.

8. Linearmotor (1) nach Anspruch 7, **dadurch gekennzeichnet, dass** seitlich der zentrischen Vertiefung (3 3) im Monoblock entlang einer Längsseite eine Leiterplatte (35) mit Speiseleitungen für die Erregerspulen (34) angebracht ist, während auf der anderen Längsseite der Vertiefung eine Leiterplatte (36) mit einer Elektronik für die Positionserfassung und die motorspezifischen Daten angebracht ist.

9. Linearmotor (1) nach Anspruch 1, **dadurch gekennzeichnet, dass** im Monoblock senkrecht von der Grundplatte (2) abstehend ein Anschlagbolzen (37) montiert ist, der mit seinem freien Ende in eine den maximalen Weg des Schlittens (9) definierende, begrenzte Längsausfräsung (93) eingreift.

10. Linearmotor (1) nach Anspruch 1, **dadurch gekennzeichnet, dass** im Monoblock (4) parallel und unterhalb der Längsnuten (30,31) zur Aufnahme der Laufstäbe (11) je eine Einlegenut (38) zum Einschieben einer Abdeckung (8) vorhanden ist.

11. Linearmotor (1) nach Anspruch 8 , **dadurch gekennzeichnet, dass** in der Unterseite des Schlittens (9) eine Aufnahmenut (94) eingeformt ist, die über der Leiterplatte (36) für die Positionserfassung liegt und in der ein Glasmassstab (19) mit optisch lesbarer Markierung liegt, der bei der Bewegung des Schlittens über einen optischen Messkopf (20) hinweg bewegbar ist, welcher auf der erwähnten Leiterplatte (36) angeordnet ist.

12. Linearmotor (1) nach Anspruch 1, **dadurch gekennzeichnet, dass** der Monoblock (4) und der Schlitten (9) mit aufschraubbaren Stirnabdeckungen (5,6) versehen sind, die eine Längsverschiebung der Laufstäbe(II) verunmöglichen.

13. Linearmotor (1) nach Anspruch 1, **dadurch gekennzeichnet, dass** der Schlitten (9) und der Monoblock (4) Gewindelöcher (18) zur Montage aufweisen.

## Claims

1. Linear motor with an integrated guide (1), comprising a base plate (2) and a slide (9), which is linearly movably guided over the base plate and is mounted on rollers, wherein the linear drive and a position measuring system are arranged in the region between the rails, and wherein the base plate (2) with the side walls (3) is configured as a monoblock (4), in which recesses are formed to receive units necessary for the drive, **characterised in that**
a. the rollers run on rails and
b. a cross sectionally rectangular longitudinal groove (30, 31) is milled in the side walls (3) in each case, said longitudinal groove being used to receive two inserted cross sectionally rounded running rods (11) in each case,
c. the slide (9) has mirror-inverted cross sectionally rectangular grooves (90) on the longitudinal end faces, in which such cross sectionally rounded running rods (11) are inserted,
d. wherein the slide (9) is mounted in a rolling manner on both sides on cantilevered cross-roller cages (12), which run on the running rods (11)
e. and **in that** the slide (9) is approximately profiled in a U-shape and is received with its U-profile approximately flush with the profile of the monoblock consisting of the base plate (2) and side walls (3) formed thereon.

2. Linear motor (1) according to claim 1, **characterised in that** a tension rod (15) is inserted on one side in one of the two longitudinal grooves (30, 31), which tension rod is adjustably displaceable transverse to the running direction of the slide (9) by means of threaded bores (18) provided in the corresponding side wall by means of thrust bolts (16) to allow a play-free mounting.

3. Linear motor (1) according to claim 1, **characterised in that** an elongate recess (32) is formed in the base plate (2) parallel to the end face (39) of the monoblock (4), and **in that** at least one cable clamp is arranged between the recess (32) and the end face (39), it being possible to fasten at least one cable (7) with said cable clamp in a positive and/or non-positive manner on the base plate (2) and to arrange it opening into the recess (32).

4. Linear motor (1) according to claim 1, **characterised in that** additional threaded bores (18), which are used to assemble the linear motor on a fixing face, are formed in the side walls.

5. Linear motor (1) according to claim 1, **characterised in that** the monoblock (4) and the slide (9) are manufactured from the same material.

6. Linear motor (1) according to claim 5, **characterised in that** the monoblock (4) and the slide (9) are manufactured from aluminium.

7. Linear motor (1) according to claim 1, **characterised in that** formed in the monoblock is a central indentation (33), in which a unit provided with excitation coils (34) can be inserted, while a longitudinal recess (91), which is used to receive a magnet unit (92), is formed in the slide (9) in the face directed toward the base plate in the installed state.

8. Linear motor (1) according to claim 7, **characterised in that** a circuit board (35) with feed lines for the excitation coils (34) is provided to the side of the central indentation (33) in the monoblock along one longitudinal side, while a circuit board (36) with an electronic system for position detection and the motor-specific data is provided on the other longitudinal side of the indentation.

9. Linear motor (1) according to claim 1, **characterised in that** a stop bolt (37) is mounted in the monoblock projecting perpendicularly from the base plate (2), said stop bolt engaging with its free end in a limited longitudinal milled recess (93) defining the maximum path of the slide (9).

10. Linear motor (1) according to claim 1, **characterised in that** an insertion groove (38) to insert a cover (8) is present in each case in the monoblock (4) parallel to and below the longitudinal grooves (30, 31) to receive the running rods (11).

11. Linear motor (1) according to claim 8, **characterised in that** formed in the lower side of the slide (9) is a receiving groove (94), which lies over the circuit board (36) for position detection and in which a glass measure (19) with optically readable markings is located, which can be moved, upon the movement of the slide, across an optical measuring head (20), which is arranged on the circuit board (36) mentioned.

12. Linear motor (1) according to claim 1, **characterised in that** the monoblock (4) and the slide (9) are provided with screw-on end coverings (5, 6), which prevent a longitudinal displacement of the running rods (11).

13. Linear motor (1) according to claim 1, **characterised in that** the slide (9) and the monoblock (4) have threaded holes (18) for assembly.

## Revendications

1. Moteur linéaire avec un guidage intégré (1) comprenant une plaque de base (2) et un coulisseau (9) qui est guidé mobile linéairement sur la plaque de base et qui est monté sur galets, étant précisé que l'entraînement linéaire et un système de mesure de position sont disposés dans la zone entre les glissières, et que la plaque de base (2) avec les parois latérales (3) est conçue comme un monobloc (4) dans lequel sont formés des creux pour recevoir des unités nécessaires à l'entraînement, **caractérisé en ce que**
a. les galets roulent sur des glissières et
b. dans chacune des parois latérales (3) est fraisée une rainure longitudinale (30, 31) à section transversale rectangulaire qui sert à recevoir deux tiges de roulement (11) à section transversale ronde
c. **en ce que** le coulisseau (9) présente sur ses surfaces frontales longitudinales des rainures (90) correspondantes à section transversale rectangulaire dans lesquelles sont insérées des tiges de roulement (11) également à section ronde,
d. étant précisé que le coulisseau (9) est monté roulant, des deux côtés, sur des cages à galets croisés (12) qui roulent sur les tiges de roulement (11),
e. et **en ce que** le coulisseau (9) est profilé à peu près en U et est logé avec son profil en U à peu près dans l'alignement du profil du monobloc composé de la plaque de base (2) et des parois latérales (3) rapportées sur celui-ci.

2. Moteur linéaire (1) selon la revendication 1, **caractérisé en ce qu'**il est prévu, insérée unilatéralement dans l'une des deux rainures longitudinales (30, 31), une tige de serrage (15) qui est apte à coulisser de manière réglable transversalement par rapport au sens de roulement du coulisseau (9), à l'aide de vis de pression (16), par l'intermédiaire de perçages filetés (18) prévus dans la paroi latérale correspondante, pour permettre un montage sans jeu.

3. Moteur linéaire (1) selon la revendication 1, **caractérisé en ce que** dans la plaque de base (2), parallèlement à la surface frontale (39) du monobloc (4), est formé un creux oblong (32), et **en ce qu'**entre le creux (32) et la surface frontale (39) est disposé au moins un serre-câble avec lequel au moins un câble (7) est apte à être fixé par complémentarité de forme et/ou par force à la plaque de base (2) et qui est disposé de manière à déboucher dans le creux (32).

4. Moteur linéaire (1) selon la revendication 1, **caractérisé en ce qu'**il est prévu, formés dans les parois latérales, des perçages filetés supplémentaires (18) qui servent au montage du moteur linéaire sur une surface de fixation.

5. Moteur linéaire (1) selon la revendication 1, **caractérisé en ce que** le monobloc (4) et le coulisseau (9) sont fabriqués dans le même matériau.

6. Moteur linéaire (1) selon la revendication 5, **caractérisé en ce que** le monobloc (4) et le coulisseau (9) sont fabriqués en aluminium.

7. Moteur linéaire (1) selon la revendication 1, **caractérisé en ce qu'**il est prévu, formée dans le monobloc, une cavité centrée (33) dans laquelle peut être placée une unité pourvue de bobines d'excitation (34), tandis qu'il est prévu, formé dans le coulisseau (9), dans une surface dirigée vers la plaque de base, à l'état monté, un creux longitudinal (91) qui sert à recevoir une unité magnétique (92).

8. Moteur linéaire (1) selon la revendication 7, **caractérisé en ce qu'**il est prévu sur le côté de la cavité centrée (33), dans le monobloc, le long d'un côté longitudinal, une carte imprimée (35) avec des lignes d'alimentation pour les bobines d'excitation (34), tandis que sur l'autre côté longitudinal de la cavité est installée une carte imprimée (36) avec un système électronique pour la détection de position et les données propres au moteur.

9. Moteur linéaire (1) selon la revendication 1, **caractérisé en ce qu'**il est prévu dans le monobloc, dépassant perpendiculairement de la plaque de base (2), une tige de butée (37) qui pénètre avec son extrémité libre dans une fraisure longitudinale (93) qui définit la course maximale du coulisseau (9).

10. Moteur linéaire (1) selon la revendication 1, **caractérisé en ce qu'**il est prévu dans le monobloc (4), parallèlement aux rainures longitudinales (30, 31) et au-dessous de celles-ci, pour recevoir les tiges de roulement (11), des rainures d'insertion (38) respectives pour glisser un recouvrement (8).

11. Moteur linéaire (1) selon la revendication 8, **caractérisé en ce qu'**il est prévu, formée dans le côté inférieur du coulisseau (9), une rainure de réception (94) qui se trouve au-dessus de la carte imprimée (36) pour la détection de position et dans laquelle se trouve une règle graduée en verre (19), pourvue d'un marquage lisible par voie optique, qui est mobile lors du déplacement du coulisseau au-delà d'une tête de mesure optique (20) disposée sur la carte imprimée (36) mentionnée.

12. Moteur linéaire (1) selon la revendication 1, **caractérisé en ce que** le monobloc (4) et le coulisseau (9) sont pourvus de recouvrements frontaux (5, 6) aptes à être vissés qui empêchent un coulissement longitudinal des tiges de roulement (11).

13. Moteur linéaire (1) selon la revendication 1, **caractérisé en ce que** le coulisseau (9) et le monobloc (4) présentent des trous filetés (18) pour le montage.
